# EUROPEAN PATENT SPECIFICATION

(11) **EP 2 577 050 B1**
(45) Date of publication and mention of the grant of the patent: **29.04.2015**
(21) Application number: 11723237.1
(22) Date of filing: 26.05.2011
(51) Int. Cl.: F03D 1/06

(54) **METHOD FOR REDUCING FLUID FLOW INDUCED FORCES PRODUCED BY VORTEX SHEDDING ON A WIND TURBINE ROTOR BLADE**
VERFAHREN ZUR REDUKTION VON STRÖMUNGSINDUZIERTEN KRÄFTEN DURCH KARMANSCHE WIRBEL AUF EINEM WINDTURBINENROTORBLATT
PROCÉDÉ POUR LA RÉDUCTION DE FORCES INDUITES PAR L'ÉCOULEMENT DE FLUIDE PRODUITES PAR LE DÉCOLLEMENT DE TOURBILLON D'UNE AUBE DE ROTOR D'ÉOLIENNE

(30) Priority: 31.05.2010 US 349964 P; 27.05.2010 DK 201070218
(43) Date of publication of application: 10.04.2013
(73) Proprietor: Vestas Wind Systems A/S, 8200 Aarhus N (DK)
(72) Inventor: BRYANT, Joshua, 8200 Aarhus N (DK); BEHRENS, Tim, 8200 Aarhus N (DK); XUE, Sidney, Katy, 77494 (US); SAREEN, Ashish, 8200 Aarhus N (DK); JOHNSON, Bradley, 8200 Aarhus N (DK)
(74) Representative: Vestas Patents Department
(86) International application number: PCT/DK2011/050175
(87) International publication number: WO 2011/147422

(56) References cited:
- EP-A1- 1 524 431
- WO-A1-97/01709
- WO-A1-2004/099608
- DE-A1-102008 016 007
- US-A- 5 570 859

## Description

The present invention relates to reducing fluid flow induced forces produced by vortex shedding on a wind turbine rotor blade. In particular, the present invention reduces vortex shedding on a wind turbine rotor blade through the use of movable devices on the rotor blade.

Wind turbine rotor blades are susceptible to edgewise vibrations which are vibrations parallel to the chord of the rotor blade. Such edgewise vibrations may be problematic when the wind turbine is at standstill and the rotor blades are braked (mechanically or aerodynamically) or are idling slowly.

One cause of the initial disturbances which lead to edgewise vibrations at wind turbine standstill is vortex shedding. If a wind turbine rotor blade is not positioned correctly toward the oncoming flow the blade will present a bluff body to the oncoming flow. When such a bluff body is subjected to the oncoming wind flow, the flow may separate from the blade giving rise to periodic vortex shedding form either side of the blade. This periodic vortex shedding causes fluctuating pressure forces on the surfaces of the blade which may then result in the blade experiencing edgewise vibrations. Wind turbine rotor blades are typically slender flexible members and if the frequency of the vortex shedding happens to be close to one of the eigen frequencies of the blade, this may lead to forces which could result in structural failure of the blade or reduce the lifetime of the blade.

US5570859 describes a wind turbine having a rotor blade with a spoiler flap. The spoiler flap is activated to control blade thrust and bending moments as well as acting as an aerodynamic braking device,

WO97/01709 describes a system for reducing loads on a wind turbine rotor blade which uses a flap that is connected to a mass, so that mass moves the flap during operation.

WO2004/099608 describes a wind turbine blade having flaps that can be adjusted so that the lift generated by the blade can be varied in the spanwise direction of the rotor blade.

EP1524431 describes a wind turbine rotor blade with a flap that pivots at the trailing edge. Different size flaps are provided along the length of the blade.

It is an aim of the present invention to reduce the fluid flow induced forces produced by vortex shedding upon a wind turbine rotor blade when the wind turbine is at standstill.

According to a first aspect of the present invention there is provided a method of reducing fluid flow induced forces produced by vortex shedding upon a wind turbine rotor blade having a blade body, the method comprising: providing a plurality of movable devices connected to the blade body and spaced along the span of the rotor blade for modifying the aerodynamic surface or shape of the rotor blade; configuring at least two of the plurality of movable devices such that their position relative to the blade body when the rotor blade is not rotating, is at a standstill position; wherein the standstill positions of the at least two of the plurality of movable devices relative to the blade body are different.

By configuring at least two of the plurality of movable devices such they have different standstill positions along the span of the blade means that the frequency at which vortices are shed, varies along the span of the blade. Therefore, the risk of synchronous vortex shedding along the span of the blade is reduced. Consequently, it is less likely that one distinct frequency of vortex shedding will appear which may excite blade eigen-frequencies and lead to edgewise vibrations.

By "standstill position" is meant the position at which the movable devices are set when the rotor blade is not rotating about a horizontal axis.

The method may further comprise configuring each of the plurality of movable device such that their position relative to the blade body when the rotor blade is not rotating is at a standstill position; wherein the standstill positions of each of the plurality of movable devices relative to the blade body are different to the standstill position of a neighbouring movable device relative to the blade body.

The method may further comprise configuring each of the plurality of movable device such that their position relative to the blade body when the rotor blade is not rotating is at a standstill position, wherein the standstill positions of each of the plurality of movable devices relative to the blade body are different.

At least two of the plurality of movable devices may be arranged so that they are biased to their standstill positions. The biasing may include springs or a pre-tensioned material for example.

At least two of the plurality of movable devices may comprise an actuator for moving the movable devices to their standstill positions.

The plurality of movable devices may comprise trailing edge flaps. Or, the plurality of movable devices may comprise leading edge flaps.

The plurality of movable devices may comprise trailing edge tabs. The trailing edge tabs may be in the form of Gurney flaps. The trailing edge tabs may be used during normal operation to improve the aerodynamic efficiency of the rotor blade. In normal operation of the wind turbine (i.e. when it is generating power) the trailing edge tabs may be in a fixed position relative to the blade body, or they may be actuated to provide fine tuning to reduce blade loads or increase aerodynamic performance of the blades.

The plurality of movable devices may also comprise micro-electro-mechanical (MEM) translational tabs located at a leading edge.

The actuators may comprise at least one of a pneumatic actuator, an electric motor, an/or a piezo electric actuator.

The present invention will now be described by way of example only with reference to the accompanying Figures in which:
Figure 1 is a view of a horizontal axis wind turbine.
Figure 2 shows the representation of vortex shedding from a part of a wind turbine rotor blade.
Figure 3 is a perspective view of part of a rotor blade equipped with trailing edge flaps.
Figures 4 and 5 are partial cross sections of the trailing edge region of the wind turbine rotor blade along the line IV-IV in Figure 3.
Figure 6 is a perspective view of part of a rotor blade equipped with Gurney flaps.
Figure 7 is a partial cross section view of the leading edge region of a wind turbine rotor blade equipped with MEM tabs.

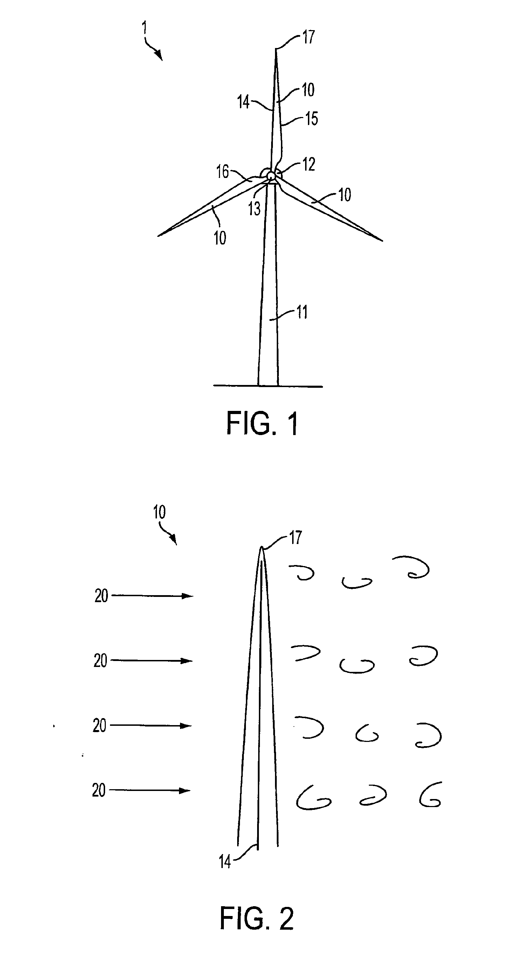

Figure 1 shows a typical horizontal axis wind turbine 1. The turbine comprises a tower 11 which supports a nacelle 12. The wind turbine 1 comprises a rotor made up of three blades 10 each having a root end 16 mounted on a hub 13. Each blade 10 comprises a leading edge 14, a trailing edge 15, and a tip 17. As is well known in the art, each blade 10 can pitch about its own pitch axis which extends longitudinally along the span of the blade, and the nacelle 12 (together with the rotor) can yaw about a vertical axis aligned with the tower 11.

When the wind turbine is at standstill and the rotor is not rotating, the rotor blades 10 are aligned with the oncoming wind. This means that the yaw of the rotor and the pitch of each blade 10 is set such that the oncoming wind is first incident on the leading edges 14 of the blades and then flows over the blade toward the trailing edge 15. The rotor blade 10 thus presents an aerodynamic profile to the oncoming wind such that minimum aerodynamic forces are transferred to the blade. To start generating power from the wind turbine, each blade 10 is pitched such that the angle of attack is increased so that the rotor starts rotating when each blade 10 generates a lift force.

Figure 2 illustrates a region of a blade 10 near the tip 17. In Figure 2, 50% of the blade span is shown. In Figure 2, the leading edge 14 is not aligned with the oncoming wind flow 20. As described above, typically, the rotor blades 10 are aligned with the oncoming fluid flow 20 when the turbine is at standstill. This non-alignment may be caused by a yaw mechanism failure, a pitch system failure, or the wind direction may have suddenly changed before the yaw mechanism has time to yaw the rotor into the oncoming wind. The rotor blade 10 now presents a "bluff" or "blunt" structure to the oncoming flow. This may lead to vortex shedding as illustrated by the flow patterns on the right hand side of Figure 2.

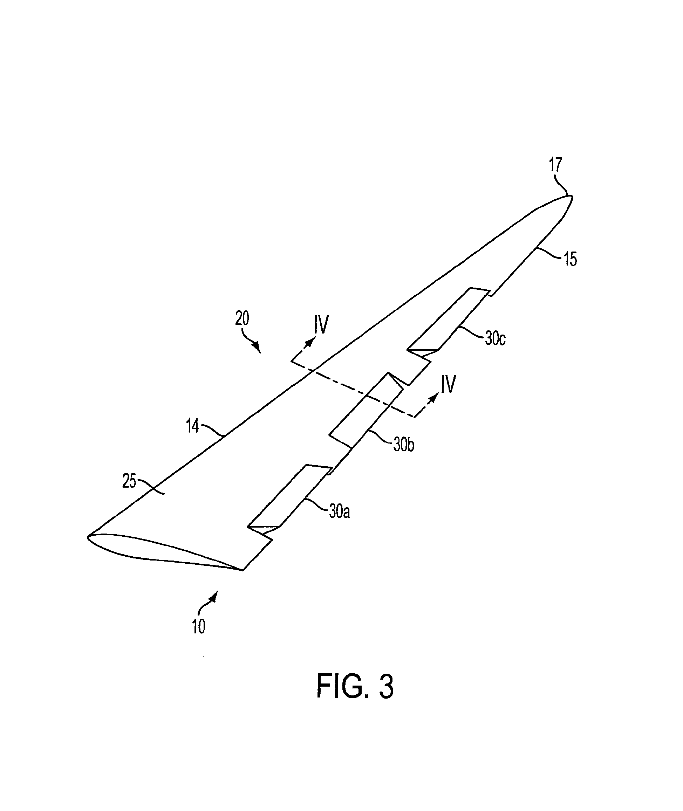

Figure 3 illustrates in a first example how fluid flow induced forces produced by vortex shedding upon the rotor blade 10 are reduced when the blade is not rotating. Figure 3 shows a region of a blade 10 adjacent to the tip 17. The blade 10 comprises a blade body 25 and three trailing edge flaps 30a, 30b and 30c (collectively referred to as 30) connected to the blade body and spaced along the span of the blade for modifying the aerodynamic surface or shape of the rotor blade. In normal use, when the turbine is generating power, the flaps 30 are actuated so that they deflect, in order to reduce the loads experienced by the wind turbine 1. However, according to the invention, during standstill of the wind turbine 1, the flaps 30 are positioned at an angle to the blade body 25 such that they alter the camber of the blade 10, that is they change the shape of the airfoil profile of the blade 10.

Each of the flaps 30 are configured such that their position relative to the blade body when the rotor blade 10 is not rotating is at a standstill position. The standstill positions of at least two of the flaps relative to the blade body 25 are different. In Figure 3 it can be seen that flap 30a and 30c are at the same standstill position which is different to the standstill position of flap 30b.

By configuring the flaps such they have different standstill positions along the span of the blade (i.e. alternating up and down in the example of Figure 3) means that the frequency at which vortices are shed, varies along the span of the blade 10.

Therefore, the risk of synchronous vortex shedding along the span of the blade 10 (as shown in Figure 2) is reduced. Consequently, it is less likely that one distinct frequency of vortex shedding will appear which may excite blade eigen-frequencies and lead to edgewise vibrations.

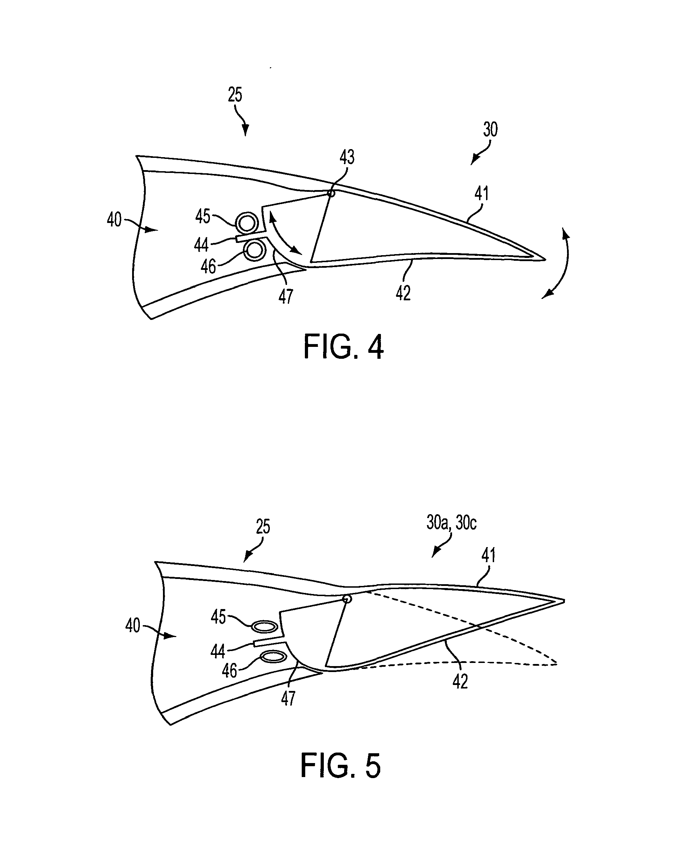

Figure 4 shows how the flaps 30 may be deflected by means of a pneumatic actuator system 40 which is disposed in the blade 10 adjacent to the flap 30. Figure 4 is partial cross section along the line IV-IV in Figure 3. The flap 30 comprises an upper skin 41 formed from a flexible material so that the blade profile maintains a smooth upper surface when the flap 30 is deflected. The flap 30 is movably connected to the blade body 25 and can be rotated about a hinge 43. A lever element or vane 44 is disposed between two pressure chambers 45 and 46. When the chamber 45 is pressurised and the chamber 46 is depressurised, the lever element 44 is forced downwards according to the orientation in Figure 4. This applies a rotational motion to the flap 30 to deflect it upwards about the hinge 43. When the chamber 45 is depressurised and the chamber 46 is pressurised, the lever element 44 is forced upwards according to the orientation in Figure 4. This applies a rotational motion to the flap 30 to deflect it downwards about the hinge 43. As shown in Figure 4, a radial surface 47 with its centre in the rotation hinge 43 is provided to enable the flap 30 to move while maintaining the continuity of a lower skin 42 of the flap 30 when the flap 30 is actuated. The chambers 45 and 46 may be in the form of thermoplastic hoses disposed along the longitudinal axis of the wind turbine blade. Each flap 30 has its own pneumatic actuator.

In the example of Figure 4, the flaps 30 are controlled such that when the turbine 1 is at standstill, the flaps have different standstill positions along the span of the blade. A control unit (not shown) in the nacelle instructs the pneumatic actuator 40 associated with each flap 30 to deflect the respective flap to a predetermined standstill position. Thus, for example, flap 30a is deflected upwards, flap 30b is deflected downwards and flap 30c is deflected upwards.

In another example, the flaps 30 are configured such that they automatically return to their respective standstill position when the turbine 1 is at standstill, i.e. the flaps move to a failsafe position. Such a system is advantageous when the power supply of, or to, the turbine fails and the flaps 30 cannot be actuated by pneumatic actuators 40. Figure 5 shows how for flaps 30a and 30c, the pressure chambers 45 and 46 of the pneumatic have no pressure within them and hence are not operating as required.

However, the flap 30 is constructed such that the upper skin 41 comprises a pre-tensioned material which acts to pull the flap upwards when the actuator 40 is not operating, in other words the flap 30 is biased towards the position shown in Figure 5. The pre-tensioned material of the upper skin 41 is a pre-tensioned fibre glass composite material. In a similar manner, flap 30b can be constructed so that the lower skin 42 is pre-tensioned so that the failsafe position of flap 30b is deflected downwards. Further examples of how the flaps 30 may deflect to their respective failsafe position in the absence of power are possible and include biasing springs and ratchet mechanisms.

Figure 4 shows how the flaps 30 are deflected by means of a pneumatic actuator. However, the skilled person will recognise that other types of actuators are possible and which may include, for example, piezo electric actuators, hydraulic actuators or electrical actuators.

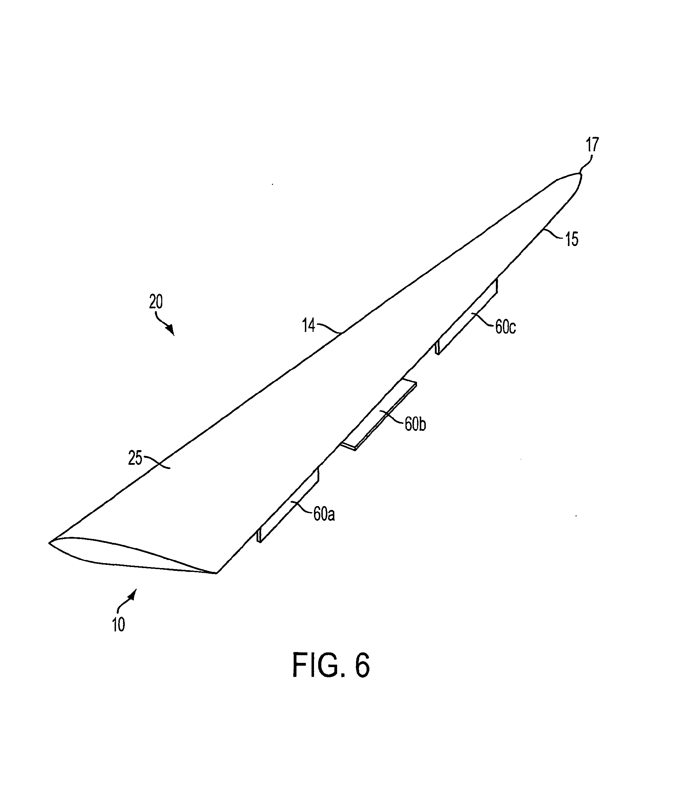

Figure 6 shows an example where the flaps 30 have been replaced with trailing edge tabs 60. In this example the trailing edge tabs are in the form of Gurney flaps 60. The Gurney flaps 60 operate in the same way to the flaps 30 shown in Figure 3. In normal use, when the blades 10 are rotating and the turbine 1 is generating power, the Gurney flaps 60 are deflected downwards and so form a 90 degree angle to the chord line and increase the aerodynamic efficiency of the rotor blade 10, as is well known in the art. However, during standstill of the wind turbine 1, some of the Gurney flaps 60 are positioned so that they are substantially parallel to the chord of the rotor blade. For example, Gurney flap 60b is shown as positioned so that it is substantially parallel to the chord of the rotor blade. The Gurney flaps 60 are operated by electric motors. In other embodiments, the Gurney flaps 60 may be operated by pneumatics or piezo electric actuators.

Each of the Gurney flaps 60 are configured such that their position relative to the blade body when the rotor blade 10 is not rotating is at a standstill position and the standstill positions of at least two of the Gurney flaps relative to the blade body 25 are different. In Figure 6 it can be seen that Gurney flaps 60a and 60c are at the same standstill position which is different to the standstill position of Gurney flap 60b.

By configuring the Gurney flaps 60 such they have different standstill positions along the span of the blade means that the frequency at which vortices are shed varies along the span of the blade 10. Therefore, the risk of synchronous vortex shedding along the span of the blade 10 (as shown in Figure 2) is reduced. Consequently, it is less likely that that one distinct frequency of vortex shedding will appear which may excite blade eigen-frequencies and lead to edgewise vibrations.

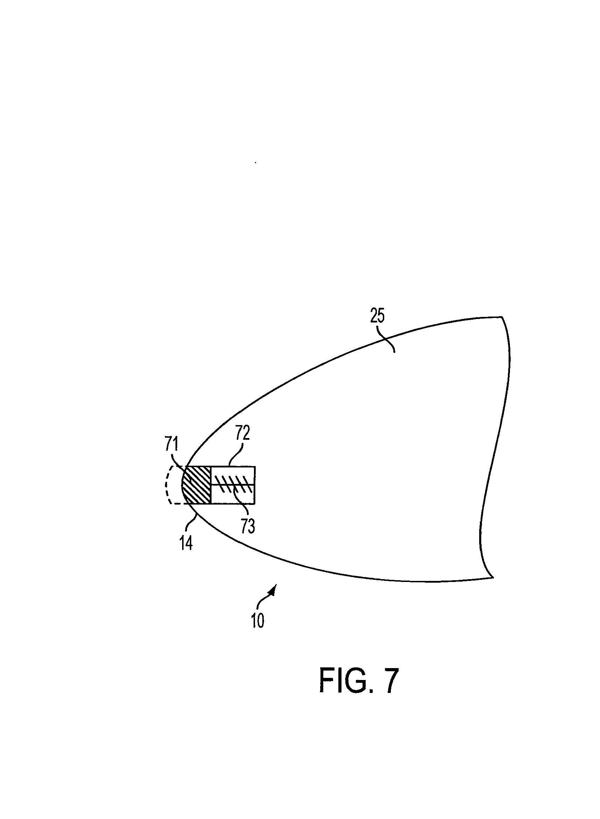

Figure 7 shows a further example of the invention where the plurality of movable devices are in the form of micro-electro-mechanical (MEM) translational tabs. The MEM tabs 71 are positioned along the leading edge 14 of the rotor blade in a spanwise direction. Figure 7 is a partial cross section through one of the MEM tabs, but it should be appreciated that a plurality of such MEM tabs are positioned along the leading edge 14 of the blade 10. During normal operation of the wind turbine 1, that is when the turbine is generating electrical power, the MEM tabs 70 are deployed in order to modify the aerodynamic surface of the blade 10 at the leading edge 14. When an electric signal is applied to the MEM tab 71, it projects out of a recess 72 in the blade body 25. The position of the protruding MEM tab 70 is shown by the dashed line in Figure 7. The MEM tabs 70 are used to modify the aerodynamic surface of the blade 10 and in particular to prevent separation of the airflow over the blade. The MEM tabs 71 are configured in a similar way to the flaps 30 or the Gurney flaps 60, that is they each have a standstill position relative to the blade body when the turbine 1 is at standstill. At least two of the MEM tabs 71 have a different standstill position relative to the blade body, i.e. some MEM tabs 71 will protrude from the blade body 25, and some MEM tabs will be located inside the recess 72. By configuring the MEM tabs 71 such they have different standstill positions along the span of the blade means that the frequency at which vortices are shed varies along the span of the blade 10. Therefore, the risk of synchronous vortex shedding along the span of the blade 10 (as shown in Figure 2) is reduced.

The MEM tabs 71 are configured to their standstill positions by a spring 73. A spring 73 biases each MEM tab towards its failsafe standstill position. Thus, if the power supply is lost to the MEM tabs 71 which may occur when the turbine is at standstill, the MEM tabs will automatically revert to their failsafe position. To achieve the different failsafe positions along the span of the blade 10, it is necessary that the different springs have different spring constants, and some springs may be tensile springs and some springs may be compression springs.

In a further example, the trailing edges of the flaps shown in Figure 3 are serrated. By using serrated trailing edges reduces the aero-acoustic noise that is generated by the wind turbine blades when in operation.

As described above, by giving the movable aerodynamic device different standstill deflections along the span of the blade 10 (e.g. the flaps 30 may alternate full up/full down) the risk of synchronous vortex shedding along the span of the blade is reduced.

## Claims

1. A method of reducing fluid flow induced forces produced by vortex shedding upon a wind turbine rotor blade (10) having a blade body (25), the method comprising:
providing a plurality of movable devices (30) connected to the blade body and spaced along the span of the rotor blade for modifying the aerodynamic surface or shape of the rotor blade;
configuring at least two of the plurality of movable devices (30) such that their position relative to the blade body (25) when the rotor blade is not rotating, is at a standstill position; wherein
the standstill positions of the at least two of the plurality of movable devices (30) relative to the blade body are different.

2. A method according to claim 1, further comprising configuring each of the plurality of movable device (30) such that their position relative to the blade body (25) when the rotor blade (10) is not rotating is at a standstill position; wherein
the standstill positions of each of the plurality of movable devices (30) relative to the blade body are different to the standstill position of a neighbouring movable device relative to the blade body.

3. A method according to claim 1 or claim 2, further comprising configuring each of the plurality of movable device (30) such that their position relative to the blade body when the rotor blade (10) is not rotating is at a standstill position, wherein
the standstill positions of each of the plurality of movable devices relative to the blade body are different.

4. A method according to any preceding claim, wherein at least two of the plurality of movable devices (30) are arranged so that they are biased to their standstill positions.

5. A method according to any preceding claim, wherein at least two of the plurality of movable devices (30) comprise an actuator (40) for moving the movable devices to their standstill positions.

6. A method according to any preceding claim, wherein the plurality of movable devices (30) comprise trailing edge flaps.

7. A method according to any one of claims 1 to 5, wherein the plurality of movable devices (30) comprise leading edge flaps.

8. A method according to any one of claims 1 to 5, wherein the plurality of movable devices (30) comprise trailing edge tabs.

9. A method according to any one of claims 1 to 5, wherein the plurality of movable devices (30) comprise micro-electro-mechanical (MEM) translational tabs (71) located at a leading edge (14).

## Patentansprüche

1. Verfahren zur Verringerung der Fluidströmung, die durch Kräfte induziert worden ist, die durch eine Wirbelablösung an einem Rotorblatt (10) einer Windturbine, das einen Blattkörper (25) aufweist, verursacht worden sind, wobei das Verfahren umfasst:
Bereitstellen mehrerer beweglicher Vorrichtungen (30), die mit dem Blattkörper verbunden sind und die entlang der Spannweite des Rotorblatts voneinander beabstandet angeordnet sind, um die aerodynamische Oberfläche oder Form des Rotorblatts zu verändern;
Konfigurieren von mindestens zweien der mehreren beweglichen Vorrichtungen (30) derart, dass sich dann, wenn sich das Rotorblatt nicht dreht, ihre Stellung relativ zu dem Blattkörper (25) in einer Stillstandsposition befindet; wobei
die Stillstandspositionen der mindestens zwei der mehreren beweglichen Vorrichtungen (30) relativ zu dem Blattkörper unterschiedlich sind.

2. Verfahren nach Anspruch 1, das ferner ein Konfigurieren einer jeden der mehreren beweglichen Vorrichtungen (30) derart umfasst, dass sich dann, wenn sich das Rotorblatt (10) nicht dreht, ihre Stellung relativ zu dem Blattkörper (25) in einer Stillstandsposition befindet; wobei
sich die Stillstandspositionen einer jeden der mehreren beweglichen Vorrichtungen (30) relativ zu dem Blattkörper von einer benachbarten beweglichen Vorrichtung relativ zu dem Blattkörper unterscheiden.

3. Verfahren nach Anspruch 1 oder 2, das ferner ein Konfigurieren einer jeden der mehreren beweglichen Vorrichtungen (30) derart umfasst, dass sich dann, wenn sich das Rotorblatt (10) nicht dreht, ihre Stellung relativ zu dem Blattkörper in einer Stillstandsposition befindet; wobei
die Stillstandspositionen einer jeden der mehreren beweglichen Vorrichtungen relativ zu dem Blattkörper unterschiedlich sind.

4. Verfahren nach einem vorhergehenden Anspruch, wobei mindestens zwei der mehreren beweglichen Vorrichtungen (30) so angeordnet sind, dass sie gegenüber ihren Stillstandspositionen vorgespannt sind.

5. Verfahren nach einem vorhergehenden Anspruch, wobei mindestens zwei der mehreren beweglichen Vorrichtungen (30) eine Betätigungsvorrichtung (40) umfassen, um die beweglichen Vorrichtungen zu ihren Stillstandspositionen zu bewegen.

6. Verfahren nach einem vorhergehenden Anspruch, wobei die mehreren beweglichen Vorrichtungen (30) Klappen an der Blatthinterkante umfassen.

7. Verfahren nach einem der Ansprüche 1 bis 5, wobei die mehreren beweglichen Vorrichtungen (30) Klappen an der Blattvorderkante umfassen.

8. Verfahren nach einem der Ansprüche 1 bis 5, wobei die mehreren beweglichen Vorrichtungen (30) Trimmbleche an der Blatthinterkante umfassen.

9. Verfahren nach einem der Ansprüche 1 bis 5, wobei die mehreren beweglichen Vorrichtungen (30) mikroelektromechanische (MEM), translatorische Trimmbleche (71) umfassen, die an einer Blattvorderkante (14) angeordnet sind.

## Revendications

1. Procédé de réduction de forces induites par un écoulement de fluide produites par détachement de tourbillon sur une pale de rotor d'éolienne (10) ayant un corps de pale (25), le procédé comprenant :
la fourniture d'une pluralité de dispositifs mobiles (30) raccordés au corps de pale et espacés le long de l'envergure de la pale de rotor pour modifier la surface ou la forme aérodynamique de la pale de rotor ;
la configuration d'au moins deux de la pluralité de dispositifs mobiles (30) de sorte que leur position par rapport au corps de pale (25), lorsque la pale de rotor n'est pas en rotation, soit en position d'arrêt ; dans lequel
les positions d'arrêt des au moins deux de la pluralité de dispositifs mobiles (30) par rapport au corps de pale sont différentes.

2. Procédé selon la revendication 1, comprenant en outre la configuration de chacun de la pluralité de dispositifs mobiles (30) de sorte que leur position par rapport au corps de pale (25), lorsque la pale de rotor (10) n'est pas en rotation, soit en position d'arrêt ; dans lequel
les positions d'arrêt de chacun de la pluralité de dispositifs mobiles (30) par rapport au corps de pale sont différentes de la position d'arrêt d'un dispositif mobile voisin par rapport au corps de pale.

3. Procédé selon la revendication 1 ou la revendication 2, comprenant en outre la configuration de chacun de la pluralité de dispositifs mobiles (30) de sorte que leur position par rapport au corps de pale, lorsque la pale de rotor (10) n'est pas en rotation, soit en position d'arrêt, dans lequel
les positions d'arrêt de chacun de la pluralité de dispositifs mobiles par rapport au corps de pale sont différentes.

4. Procédé selon l'une quelconque des revendications précédentes, dans lequel au moins deux de la pluralité de dispositifs mobiles (30) sont agencés de sorte qu'ils soient sollicités vers leurs positions d'arrêt.

5. Procédé selon l'une quelconque des revendications précédentes, dans lequel au moins deux de la pluralité de dispositifs mobiles (30) comprennent un actionneur (40) pour déplacer les dispositifs mobiles vers leurs positions d'arrêt.

6. Procédé selon l'une quelconque des revendications précédentes, dans lequel la pluralité de dispositifs mobiles (30) comprend des volets de bord de fuite.

7. Procédé selon l'une quelconque des revendications 1 à 5, dans lequel la pluralité de dispositifs mobiles (30) comprend des volets de bord d'attaque.

8. Procédé selon l'une quelconque des revendications 1 à 5, dans lequel la pluralité de dispositifs mobiles (30) comprend des compensateurs de bord de fuite.

9. Procédé selon l'une quelconque des revendications 1 à 5, dans lequel la pluralité de dispositifs mobiles (30) comprend des compensateurs de translation microélectromécaniques (MEM) (71) situés au niveau d'un bord d'attaque (14).
